## Europäisches Patentamt
## European Patent Office
## Office européen des brevets

(19)

(11) Veröffentlichungsnummer: **0 019 585**
**B1**

(12)

# EUROPÄISCHE PATENTSCHRIFT

(45) Veröffentlichungstag der Patentschrift:
**22.12.82**

(21) Anmeldenummer: **80810144.8**

(22) Anmeldetag: **30.04.80**

(51) Int. Cl.³: **F 16 C 3/02,** B 29 D 23/12,
F 16 L 47/00

(54) **Kraftübertragungswelle.**

(30) Priorität: **10.05.79 CH 4373/79**

(43) Veröffentlichungstag der Anmeldung:
**26.11.80 Patentblatt 80/24**

(45) Bekanntmachung des Hinweises auf die Patenterteilung:
**22.12.82 Patentblatt 82/51**

(84) Benannte Vertragsstaaten:
**CH DE FR GB IT LI NL SE**

(56) Entgegenhaltungen:
**DE-A-2 703 581**
**FR-A-887 124**
**FR-A-2 060 049**
**FR-A-2 284 819**
**FR-A-2 348 393**
**FR-A-2 371 598**
**FR-A-2 389 038**
**US-A-3 970 495**

(73) Patentinhaber: **CIBA-GEIGY AG, Patentabteilung
Postfach, CH-4002 Basel (CH)**

(72) Erfinder: **Puck, Alfred, Dr., Hessenallee 11,
D-3500 Kassel (DE)**
Erfinder: **Voirol, Peter, Gorenmattstrasse 41,
CH-4102 Binningen (CH)**

ACTORUM AG

Kraftübertragungswelle

Die Erfindung betrifft eine Kraftübertragungswelle gemäss dem Oberbegriff von Patentanspruch 1.

In letzter Zeit wurden zahlreiche Versuche unternommen, die im Kraftfahrzeugbau bisher üblichen Kraftübertragungswellen (Kardanwellen) aus Stahl durch solche auskohlenstoffaserverstärktem Kunststoff zu ersetzen. Einige der Hauptschwierigkeiten, die sich diesen Bestrebungen bisher jedoch widersetzten, nämlich die Unterdrückung von unerwünschten Schwingungen bei hohen Drehzahlen sowie die wegen ihrer relativ geringen Querzug- und Schubfestigkeit schlechte Verwendbarkeit der aber anderseits aus Kostengründen derzeit einzig in Frage kommenden sogenannten „Pitch-Fibers", konnten durch die in der EP-A Nr. 9007 beschriebene ganz spezielle Wahl der Faserstruktur überwunden werden. Die Drehmomentseinleitung in das durch die gewählte Faserstruktur stark anisotrope Material ist dabei aber zumindest für höhere Anforderungen sehr problematisch.

Bei dem meisten bisher bekannten Kraftübertragungswellen aus mit Kohlenstoffasern verstärktem Kunststoff, wie sie zum Teil auch in US-A Nr. 4041599 oder US-A Nr. 4089190 beschrieben sind, sind die Fittinge in die Enden des Kunststoffrohrs eingeklebt, bzw. mittels längerer Rohransätze in die Rohrenden während der Rohrherstellung integriert (eingewickelt). In beiden Fällen erfolgt die Drehmomentsübertragung über eine Klebfuge, was sich insbesondere bei höheren Drehmomenten als unzureichend erwiesen hat. Hierzu kommt noch, dass bei den nach der genannten EP-A Nr. 9007 erforderlichen, sehr kleinen Wickelwinkeln (etwa ± 10-20° zur Rohrachse) eine Entwicklung der Anschlussfittinge praktisch schlecht realisierbar ist.

Bei einer weiteren bekannten, z.B. in der FR-A Nr. 2389038 beschriebenen Kardanwelle aus mit Kohlenstoffasern verstärktem Kunststoff ist der Anschlussfitting direkt als Kreuzgelenk ausgebildet und mittels radialer Lagerbolzen im wandverstärkten Wellenende befestigt. Die Verstärkung des Wellenendes besteht dabei aus Glasfasern, die auf die Enden des sonst ausschliesslich mit Kohlenstoffasern verstärkten Rohrs zusätzlich und mit gegenüber den Kohlenstoffasern anderer Wickelstruktur aufgebracht sind. Aufgrund der Verschiedenartigkeit der Fasern und ihrer Struktur in Welle und Wandverstärkung ist auch bei dieser bekannten Kardanwelle, zumindest bei höheren Belastungen und Temperaturbeanspruchungen, keine sichere und dauerhafte Krafteinleitung gewährleistet.

Aufgabe der Erfindung ist demnach, eine Kraftübertragungswelle der eingangs definierten Art hinsichtlich der Drehmomentseinleitung zu verbessern. Erfindungsgemäss wird diese Aufgabe durch die im Patentanspruch 1 angeführten Massnahmen gelöst.

Im folgenden wird die Erfindung anhand eines in der Zeichnung dargestellten Ausführungsbeispiels näher erläutert. Es zeigen:

Fig. 1 einen Axialschnitt durch ein Ende einer erfindungsgemässen Welle,

Fig. 2 einen Querschnitt durch die Welle nach der Linie II-II in Fig. 1,

Fig. 3 eine schematische Teilansicht der Welle mit der Wickelstruktur des Rohrs, und

Fig. 4-7 schematische Darstellungen zur Erläuterung der Erzeugung der Wandverstärkungen des Rohrs.

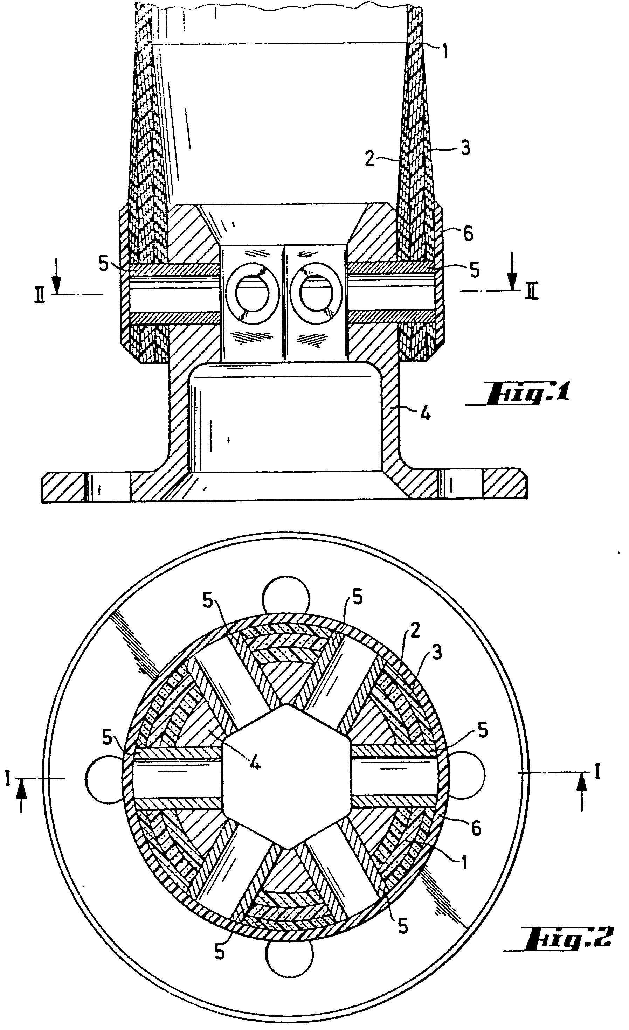

Die in Fig. 1 und 2 dargestellte Welle umfasst ein mittels Kohlenstoffasern verstärktes Kunststoffrohr 1, das an seinen beiden Enden, von denen in Fig. 1 nur eines dargestellt ist, durch je zwei ein- bzw. aufgeklebte Hülsen bzw. Rohrstücke 2 und 3 verstärkt ist. In die innere Verstärkungshülse 2 ist ein Metallfitting 4 eingeschoben. Die Drehmomentsübertragung vom Metallfitting in die Welle erfolgt mittels radialer Bolzen 5. Letztere sind durch eine auf die äussere Verstärkungshülse 3 aufgeklebte Hülse 6 gesichert.

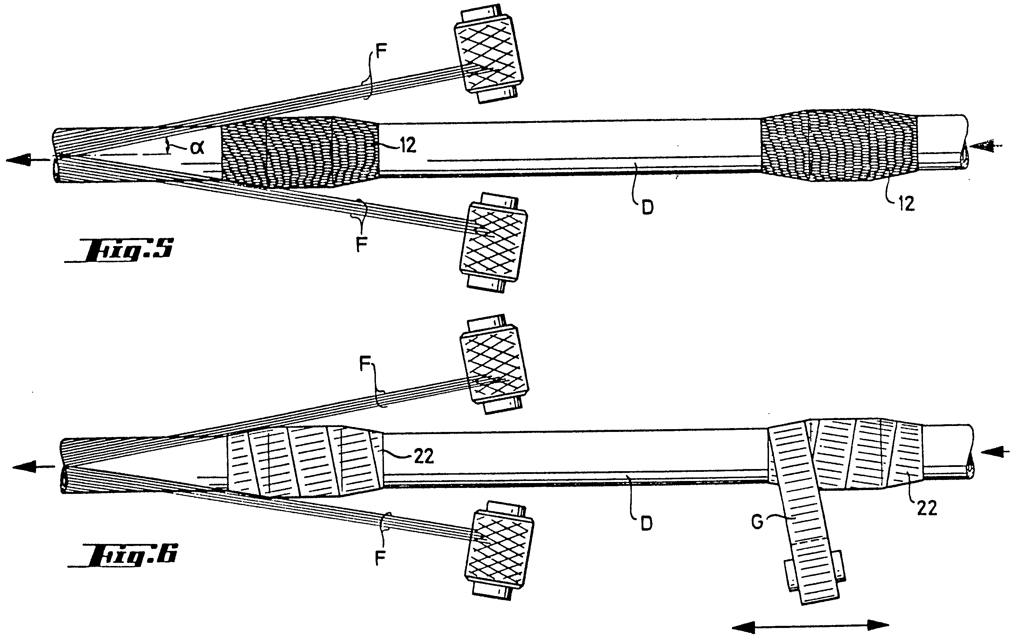

Das faserverstärkte Kunststoffrohr 1 ist nach an sich bekannten Methoden hergestellt, wie sie z.B. in den US-Patentschriften Nrn. 2723705, 3068134, 3202560, 3216876, 3700519 und 4089190 beschrieben sind, indem, wie in den Fig. 5-7 schematisch dargestellt, mit einem härtbaren Kunststoff getränkte Verstärkungsfasern F aus Kohlenstoff unter vorbestimmten Wickelwinkeln $\alpha$ auf einen Kern D aufgewickelt werden, und das Ganze dann unter Wärmeeinwirkung ausgehärtet wird.

Als Kohlenstoffverstärkungsfasern kommen vorzugsweise die unter der Markenbezeichnung „Thornel Typ P" von der Firma Union Carbide Corp., 270 Park Avenue, New York, N.Y. 10017, angebotenen, sogenannten „Pitch-Fibers" in Frage. Ferner sind auch Aramidfasern, wie sie z.B. unter der Bezeichnung PRD-49 von der Firma Du Pont de Nemours, Wilmington, Delaware (USA), angeboten werden, oder andere Fasern mit vergleichbaren Festigkeitseigenschaften geeignet.

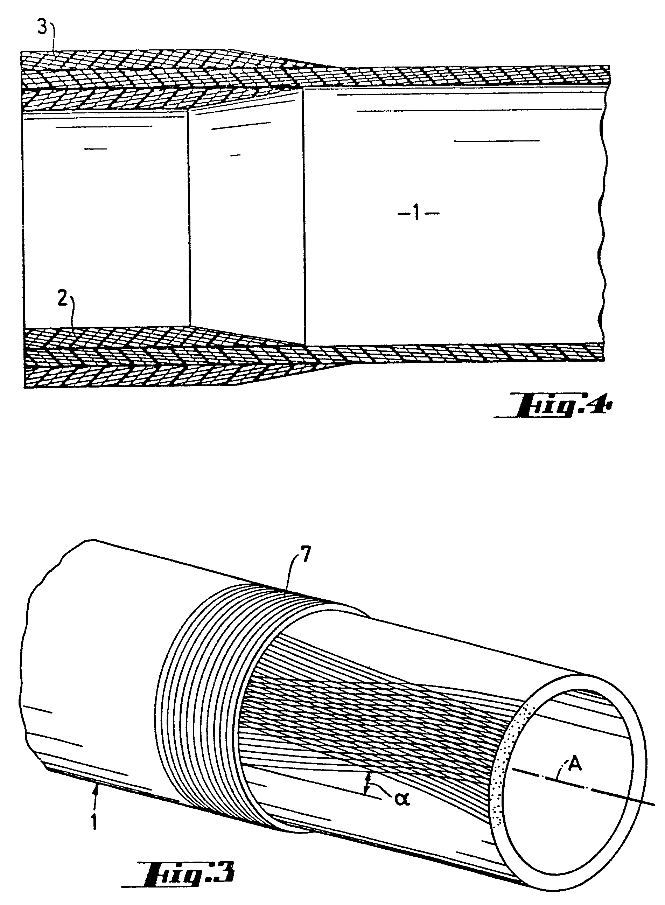

Die Fasern sind je nach Anwendungsfall mehr oder weniger stark zur Rohrachse geneigt orientiert. Der Wickelwinkel $\alpha$ (Fig. 3) in bezug auf die Rohrachse A beträgt maximal etwa ± 25° bis ± 30° vorzugsweise aber maximal ± 20° und darunter. Ein kleinerer Wickelwinkel als 10° erhöht zwar den E-Modul des Rohrs in Längsrichtung, reduziert aber gleichzeitig die Torsionssteifigkeit auf für die Verwendung als Antriebswelle unzulässig niedrige Werte. Für die Praxis besonders vorteilhaft haben sich Wickelwinkel von ± 11° bis ±17° erwiesen, insbesondere Winkel in einem Bereich von ±12° bis ±14°. Bei diesen Wickelwinkeln ergeben sich gleichzeitig sowohl genügend hohe Torsionssteifigkeiten als auch genügend hohe Längsbiegesteifigkeiten. Selbstverständlich könnten innerhalb der gegebenen Grenzen für die Wickelwinkel auch mehrere Faserschichten mit unterschiedlicher Faserorientierungen vorhanden sein.

Der Fasergehalt des Kunststoffrohrs beträgt etwa 50-70, vorzugsweise etwa 60-70 Vol.%. Um diesen relativ hohen Fasergehalt zu erreichen, wird das Rohr während der Herstellung, d.h. solange das Laminierharz noch fliessfähig ist, aussen mit einer Umfangswicklung 7 (Fig. 3) aus einem leichten und, gegenüber den Kohlefasern, relativ nachgiebigen (geringer E-Modul) Material mit hohem Wärmedehnungskoeffizienten versehen. Der Wärmedehnungskoeffizient des Umfangswickelmaterials sollte grösser sein als der Wärmedehnungskoeffizient des Kohlenstoffaserharzverbundes in Umfangsrichtung, bei den oben angeführten Wickeldaten, also z.B. etwa grösser als 25-30·10⁻⁶/° K. Als geeignetes Material (Fasern, Bänder, Gewebe) kommt beispielsweise Polyester (z.B. Diolen®, E-Modul ca. 3000 N/mm²) oder Polyamid (z.B. Nylon®)—Abreissband (Qualität 7849 von Interglas)—in Frage. Die Umfangswicklung wird mit möglichst hoher Spannung aufgebracht (Zufkraft etwa 200-500 N). Die Zugkraft darf jedoch selbstverständlich nicht solche Werte erreichen, die zu einer Beschädigung des Wickelmaterials führen. Die Umfangswicklung presst das überschüssige Laminierharz aus dem Fasergefüge, erzeugt aber, dank ihres hohen Wärmedehnungskoeffizienten und ihrer Nachgiebigkeit, keine wesentlichen interlaminaren Spannungen bei der Abkühlung nach der Aushärtung und Abkühlung des Rohrs. Zur Festigkeit und Steifigkeit des Rohrs trägt sie im wesentlichen nichts bei.

Als Kunststoff für die Rohrherstellung kommen härtbare, niederviskose Epoxidharze in Frage, beispielsweise etwa das von der Firma Ciba-Geigy AG, Basel, Schweiz, unter der Bezeichnung „Araldit CY 209" angebotene Harz mit dem Härter HT 972 oder andere Harz/Härterkombinationen, welche die gewünschten thermischen und mechanischen Festigkeiten ergeben.

Das Rohr 1, dessen Verstärkungsfasern selbst stark anisotrop sind und zudem unter einem kleinen Winkel zur Rohrachse orientiert sind, zeigt ein extrem anisotropes Verhalten, welches sich vor allem durch stark unterschiedliche Festigkeiten, E-Moduln sowie Wärmeausdehnungskoeffizienten in Längs- und Umfangsrichtung zeigt.

Wegen dieser extremen Anisotropie des Mehrschichtenverbundes, aus welchem das Rohr 1 besteht, ist es von grösster Wichtigkeit, dass die Verstärkungshülsen 2 und 3, die ja zusammen mit den zwischen ihnen liegenden Rohrenden das zu übertragende Drehmoment aufnehmen und dabei erheblichen Belastungen ausgesetzt sein können, aus gleichem oder ähnlichem Material wie das Rohr sind, und das gleiche oder wenigstens angenähert gleiche Anisotropieverhalten aufweisen wie das Rohr 1. Wäre dies nicht der Fall, so ergäben sich bei Temperaturänderungen zwischen den Verstärkungshülsen und den Rohrenden starke Spannungen, die im Extremfall bis zur Trennung führen können.

Weiterhin ist es wesentlich, dass die verstärkten Bereiche des Rohrs nicht abrupt enden, sondern dass sich die an den Rohrenden verdickte Rohrwand kontinuierlich auf die Wandstärke des Rohrs 1 reduziert. Die Verstärkungshülsen 2 und 3 sind dazu mechanisch so bearbeitet, dass sie gegen die Rohrmitte hin konisch auslaufen. Durch diesen sanften kontinuierlichen Übergang vom verstärkten Rohrende zum nicht verstärkten Wandbereich des Rohrs werden Spannungsspitzen vermieden.

In den Fig. 1, 2 und 4 sind die Wandverstärkungen der Rohrenden durch ein- bzw. aufgeklebte, vorgefertigte Verstärkungshülsen gebildet. Die Verstärkungen lassen sich jedoch auch auf andere Weise erzeugen, wenngleich dies wegen der hier verwendeten, sehr kleinen Wickelwinkel wickeltechnisch nicht so einfacht ist.

So können, z.B. gemäss Fig. 5 bereits während der Herstellung des Rohrs, auf den dabei verwendeten Wickeldorn D im Abstand der vorgesehenen Rohrlänge, angeordnete, vorgefertigte und entsprechend geformte Verstärkungshülsen 12 durch Überwickeln mit den Kohlenstoffasern F in die Rohrstruktur eingebaut werden.

Anstelle der vorgefertigten Verstärkungshülsen 12 kann gemäss Fig. 6 auch eine lokale Wicklung 22 aus einem unidirektionalen Fasergewebe G auf den Wickeldorn aufgebracht werden. Die Fasern des Gewebes sind dabei so ausgerichtet, dass sie in der Wicklung dann gleich zu liegen kommen wie die Fasern des Rohrs, so dass sich das gleiche Anisotropieverhalten ergibt.

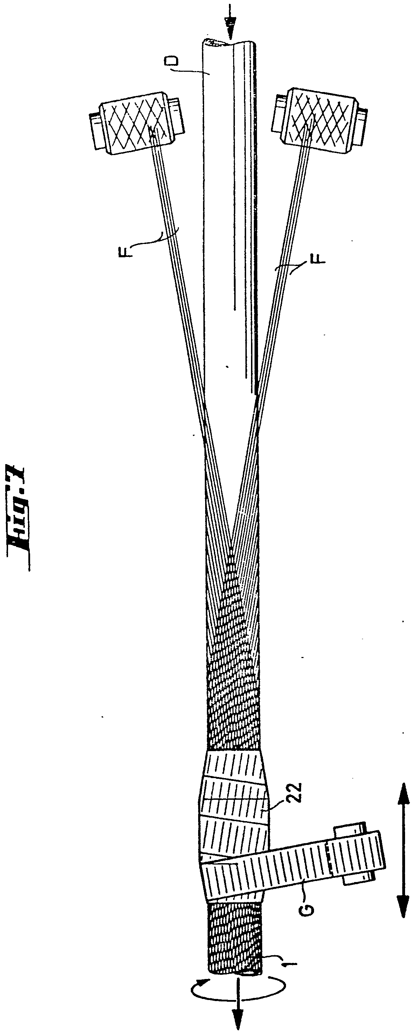

Anstelle der direkten Integration der Wandverstärkungen in das Fasergefüge des Rohrs (Fig. 5 und 6) kann gemäss Fig. 7 der Wickel 22 aus unidirektionalem Gewebe G auch nachträglich auf das bereits fertiggewickelte Rohr 1 aufgebracht werden.

Für eine kontinuierliche Rohrproduktion, wie sie bei GFK-Rohren seit langem üblich ist, scheint das Überwickeln von vorgefertigten Rohrstücken gemäss Fig. 5 am zweckmässigsten zu sein.

Bei den nach Fig. 5-7 hergestellten Rohren ergibt sich lediglich eine Aufdickung der Rohrenden nach aussen. Dies ist jedoch unwesentlich, solange die dadurch erreichte Wandverstärkung ausreicht, die durch die Drehmomentseinleitung erzeugten Spannungen zu ertragen.

Bei einer praktisch ausgeführten Kunststoffkardanwelle betrug der Wickelwinkel ±12° und der Gehalt an „Pitch-Fibers" 70 Vol.%. Diese Welle besass eine kritische Drehzahl von über 8100 U/min und eine Torsionssteifigkeit, die so war, dass der geforderte maximale Verdrehwinkel von 12° der Welle bei maximalem Drehmoment (1500 Nm) nicht überschritten wurde.

**Patentansprüche**

1. Kraftübertragungswelle mit einem aus mit Fasern hoher Steifigkeit, insbesondere Kohlenstoffasern verstärktem Kunststoff bestehenden Rohr (1), an dessen beiden Enden Anschlussfittinge (4) zur Einleitung eines Drehmoments befestigt sind, wobei die beiden Enden des Rohrs mit einer gegen die Rohrmitte im wesentlichen allmählich, insbesondere konisch auslaufenden Wandverstärkung (2, 3) versehen ist, in deren Bereich die Anschlussfittinge mit im wesentlichen radialen Bolzen (5) im Rohr befestigt sind, dadurch gekennzeichnet, dass die Wandverstärkungen (2, 3) aus mit denselben oder vergleichbaren Fasern (F) verstärktem Kunststoff bestehen, wobei die Faserstruktur der Wandverstärkungen (2, 3) gleich oder ähnlich wie die des Rohrs (1) ist, so dass das Rohr und die Wandverstärkungen, zumindest angenähert, das gleiche anisotrope Verhalten aufweisen.

2. Welle nach Anspruch 1, dadurch gekennzeichnet, dass die radialen Bolzen (5) durch eine auf den Rohrenden befestigte Hülse (6) gesichert sind.

3. Welle nach einem der beiden Ansprüche 1 oder 2, dadurch gekennzeichnet, dass die Rohrenden nur auf der Rohraussenseite verstärkt sind.

4. Welle nach einem der beiden Ansprüche 1 oder 2, dadurch gekennzeichnet, dass die Rohrenden sowohl auf der Rohraussenseite als auch auf der Rohrinnenseite verstärkt sind.

5. Welle nach einem der Ansprüche 1 bis 4, dadurch gekennzeichnet, dass die Wandverstärkungen (2, 3) einstückig mit dem Rohr sind.

6. Welle nach einem der Ansprüche 1 bis 4, dadurch gekennzeichnet, dass die Wandverstärkungen mit dem Rohr verklebte, separat hergestellte Rohrstücke (12) sind.

7. Welle nach einem der Ansprüche 1 bis 4, dadurch gekennzeichnet, dass die Wandverstärkungen durch separat hergestellte Rohrstücke (12) gebildet sind, die während der Herstellung des Rohrs in dessen Struktur eingewickelt wurden.

8. Welle nach einem der Ansprüche 1 bis 5, dadurch gekennzeichnet, dass die Wandverstärkungen durch während der Rohrherstellung aufgebrachte lokale Zusatzwicklungen (22) eines Unidirektionalfasergewebes (G) gebildet sind.

9. Welle nach Anspruch 8, dadurch gekennzeichnet, dass die Zusatzwicklungen (22) über den Fasern (F) des Rohrs angeordnet sind.

10. Welle nach Anspruch 8, dadurch gekennzeichnet, dass zumindest ein Teil der Fasern (F) des Rohrs über den Zusatzwicklungen (22) angeordnet ist.

11. Welle nach einem der Ansprüche 1 bis 10, dadurch gekennzeichnet, dass die Fasern im Rohr (1) in einem Wickelwinkel ($\alpha$) von $\pm 10°$ bis $\pm 25°$ zur Rohrachse orientiert sind.

12. Welle nach Anspruch 11, dadurch gekennzeichnet, dass der Wickelwinkel ($\alpha$) maximal $\pm 20°$ beträgt und vorzugsweise im Bereich von $\pm 14$ bis $\pm 17°$ liegt.

13. Welle nach einem der beiden Ansprüche 11 oder 12, dadurch gekennzeichnet, dass der Faseranteil am Rohr (1) etwa 50-70, vorzugsweise etwa 55-65 Vol. %, beträgt.

14. Welle nach einem der Ansprüche 1 bis 13, dadurch gekennzeichnet, dass das Rohr (1) eine Umfangswicklung (7) aus einer relativ nachgiebigen Faser, insbesondere aus Polyester, aufweist.

## Claims

1. A power transmission shaft, comprising a plastics tube (1) reinforced by fibres of high stiffness (F), especially carbon fibres, fittings (4) secured to its two ends for introducing a torque, and at each end of the tube (1) a wall reinforcement (2, 3) of fibre-reinforced plastics tapering substantially gradually, in particular conically, towards the middle of the tube, and substantially radial bolts (5) located in the region of the wall reinforcements securing said fittings (4) to said tube, wherein the wall reinforcements (2, 3) consist of plastics material reinforced with the same or similar fibres (F), the fibre structure of said wall reinforcements (2, 3) being the same as or similar to that of the tube (1), such that the tube and wall reinforcements have at least approximately the same anisotropic behaviour.

2. A shaft according to claim 1, wherein the radial bolts (5) are secured by a sleeve (6) fixed to each end of the tube.

3. A shaft according to either of claims 1 or 2, wherein the tube ends are reinforced only on the outside of the tube.

4. A shaft according to either of claims 1 or 2, wherein the tube ends are reinforced both on the outside of the tube and on the inside of the tube.

5. A shaft according to any one of claims 1 to 4, wherein the wall reinforcements (2, 3) are integral with the tube.

6. A shaft according to any one of claims 1 to 4, wherein the wall reinforcements are separately produced tubular portions (12) cemented with the tube.

7. A shaft according to any one of claims 1 to 4, wherein the wall reinforcements are formed by separately produced tubular portions (12) wound into the tube structure during its production.

8. A shaft according to any one of claims 1 to 5, wherein the wall reinforcements are formed by local additional windings (22) of a unidirectional fibre fabric (G), which are applied during the manufacture of the tube.

9. A shaft according to claim 8, wherein the additional windings (22) are disposed above the tube fibres (F).

10. A shaft according to claims 8, wherein at least some of the tube fibres (F) are disposed above the additional windings (22).

11. A shaft according to any one of claims 1 to 10, wherein the fibres in the tube are oriented at an angle ($\alpha$) from $\pm 10°$ to $\pm 25°$ to the tube axis.

12. A shaft according to claim 11, wherein the angle ($\alpha$) is at most $\pm 20°$ and is preferably in the range from $\pm 14°$ to $\pm 17°$.

13. A shaft according to either of claims 11 or 12, wherein the content of reinforcing fibres in the tube (1) is in the range 50-70 vol.%, preferably from about 55-65 vol.%.

14. A shaft according to any one of claims 1 to 13, wherein the tube (1) has a peripheral winding (7) of a relatively resilient fibre material, in particular polyester.

## Revendications

1. Arbre pour transmission de couple moteur, comportant un tube (1) en matière plastique renforcée de fibres (F) à rigidité élevée, en particulier de fibres de carbone, tube aux deux extrémités duquel sont fixés des raccords (4) destinés à l'introduction d'un couple, les deux extrémités du tube (1) étant munies d'un renforcement de paroi (2, 3) qui se termine de façon essentiellement progressive en direction du centre du tube, en particulier de façon conique, renforcement de paroi dans la zone duquel les raccords (4) sont fixés dans le tube par des axes (5) essentiellement radiaux, caractérisé en ce que les renforcements de paroi (2, 3) sont constitués par une matière plastique renforcée avec les mêmes fibres ou des fibres comparables (F), la structure des fibres des renforcements de paroi (2, 3) étant la même que celle du tube (1) ou similaire, de sorte que le tube et les renforcements de paroi présentent au moins approximativement le même comportement anisotrope.

2. Arbre selon la revendication 1, caractérisé en ce que les axes radiaux (5) sont bloqués par une douille (6) fixée sur les extrémités du tube.

3. Arbre selon l'une quelconque des revendications 1 ou 2, caractérisé en ce que les extrémités du tube ne sont renforcées que sur le côté extérieur du tube.

4. Arbre selon l'une quelconque des revendications 1 ou 2, caractérisé en ce que les extrémités du tube sont renforcées tant sur le côté extérieur du tube que sur le côté intérieur de celui-ci.

5. Arbre selon l'une quelconque des revendications 1 à 4, caractérisé en ce que les renforcements de paroi (2, 3) sont d'un seul tenant avec le tube.

6. Arbre selon l'une quelconque des revendications 1 à 4, caractérisé en ce que les renforcements de paroi sont des éléments de tube (12) fabriqués séparément et collés sur le tube.

7. Arbre selon l'une quelconque des revendications 1 à 4, caractérisé en ce que les renforcements de paroi sont constitués par des éléments de tube (12) fabriqués séparément, qui sont enveloppés, pendant la fabrication du tube, dans la structure de celui-ci.

8. Arbre selon l'une quelconque des revendications 1 à 5, caractérisé en ce que les renforcements de paroi sont constitués par des enroulements additionnels locaux (22) en un tissu de fibres unidirectionnel (G), qui sont appliqués pendant la fabrication du tube.

9. Arbre selon la revendication 8, caractérisé en ce que les enroulements additionnels (22), sont disposés sur les fibres (F) du tube.

10. Arbre selon la revendication 8, caractérisé en ce qu'une partie des fibres (F) du tube au moins est disposée sur les enroulements additionnels (22).

11. Arbre selon l'une quelconque des revendications 1 à 10, caractérisé en ce que les fibres sont orientées, dans le tube (1) avec un angle d'enroulement ($\alpha$) de $\pm$ 10° à $\pm$ 25° par rapport à l'axe du tube.

12. Arbre selon la revendication 11, caractérisé en ce que l'angle d'enroulement ($\alpha$) est au maximum de $\pm$ 20° et se situe de préférence dans la gamme comprise entre $\pm$ 14° et $\pm$ 17°.

13. Arbre selon l'une quelconque des revendications 11 ou 12, caractérisé en ce que la proportion des fibres sur le tube (1) est d'environ 50 à 70%, et de préférence environ 55 à 65% en volume.

14. Arbre selon l'une quelconque des revendications 1 à 13, caractérisé en ce que le tube (1) présente un enroulement périphérique (7), en une fibre relativement souple, en particulier en polyester.

Fig.1

Fig.2

Fig.4

Fig.3

Fig.5

Fig.6

0 019 585

Fig.1